# EUROPÄISCHE PATENTSCHRIFT

(11) **EP 1 549 533 B1**
(45) Veröffentlichungstag und Bekanntmachung des Hinweises auf die Patenterteilung: **06.09.2006**
(21) Anmeldenummer: 03773472.0
(22) Anmeldetag: 25.09.2003
(51) Int. Cl.: B60R 21/26

(54) **AIRBAGMODUL, INSBESONDERE BEIFAHRERAIRBAGMODUL**
AIRBAG MODULE, ESPECIALLY A PASSENGER AIRBAG MODULE
MODULE SAC GONFLABLE, NOTAMMENT MODULE SAC GONFLABLE DE PASSAGER

(30) Priorität: 07.10.2002 DE 10247395
(43) Veröffentlichungstag der Anmeldung: 06.07.2005
(73) Patentinhaber: Takata-Petri AG, 63743 Aschaffenburg (DE)
(72) Erfinder: CROHN, Detlef, 13156 Berlin (DE); ORTMANN, Sven, 15370 Fredersdorf (DE); LUTTER, Gerhard, 16562 Bergfelde (DE); MAROTZKE, Thomas, 16562 Bergfelde (DE)
(74) Vertreter: Baumgärtel, Gunnar
(86) Internationale Anmeldenummer: PCT/DE2003/003266
(87) Internationale Veröffentlichungsnummer: WO 2004/033263

(56) Entgegenhaltungen:
- EP-A- 1 188 624
- DE-A- 10 109 057
- DE-A- 19 957 578
- PATENT ABSTRACTS OF JAPAN vol. 1997, no. 06, 30. Juni 1997 (1997-06-30) -& JP 09 048318 A (TOYO TIRE &RUBBER CO LTD), 18. Februar 1997 (1997-02-18) in der Anmeldung erwähnt

## Beschreibung

Die Erfindung betrifft ein Airbagmodul, insbesondere Beifahrerairbagmodul nach dem Oberbegriff des Anspruchs 1.

Um negative Auswirkungen auf die Insassen eines Fahrzeugs bei der Airbagauslösung zu minimieren und um eine reproduzierbare Funktionsweise des Airbagmoduls sicherzustellen, sind Maßnahmen zur gezielt gesteuerten Gassackentfaltung erforderlich.

Neben konstruktiven Maßnahmen am Gassack sind hierzu auch konstruktive Maßnahmen am Airbagmodul bekannt. So ist aus der WO 96/25309 ein Airbagmodul bekannt, bei dem sich ein kaminartiger Diffusor in den Airbag hinein erstreckt. Oberhalb des Kamins liegt nur eine Lage des Gassacks. Der Diffusor weist in der gewünschten Hauptentfaltungsrichtung vergrößerte Ausströmöffnungen auf. Damit wird erreicht, daß der Gassack in dieser Richtung eine vergrößerte Flächenausdehnung hat.

Der Nachteil dieser Anordnung besteht darin, daß die Wandungen des Diffusors voneinander im Abstand angeordnet sein müssen, um ein Durchströmen der Gase zu ermöglichen. Dadurch wird der für den Gassack im Airbagmodul zur Verfügung stehende Raum eingeschränkt, was besonders bei begrenzten Einbauverhältnissen insgesamt eine hohe Packdichte zur Folge hat.

Aus der japanischen Offenlegungsschrift 09048318 A ist eine Airbaganordnung mit einem Rohrgasgenerator bekannt. in dieser Airbaganordnung ist ein Diffusor vorgesehen, der einen sich in den Gassack erstreckenden Steg aufweist. Der Diffusor und der Steg sind als Blechteil aus einem Stück gefertigt, und erstrecken sich über die gesamte Länge des Rohrgasgenerators, wobei der Steg in Richtung der Längsachse des Rohrgasgenerators in der Mitte des Diffusors verläuft. Seitlich des Steges und im Abstand zu diesem sind im Diffusor mehrere Ausströmöffnungen vorhanden, wobei auf einer Seite des Steges größere Ausströmöffnungen als auf der anderen Seite vorgesehen sind, bzw. Ausströmöffnungen nur auf einer Seite vorhanden sind. Der Gassack ist über dem Diffusor und beidseitig des Steges gelagert. Der Gassack wird nach Zündung des Gasgenerators an der Seite mit den größeren Ausströmöffnungen schneller entfaltet als an der anderen Seite. Gleichzeitig wird dadurch auch die Entfaltungsrichtung beeinflußt.

Diese Anordnung stellt dem Gassackpackage zwar einen größeren Stauraum zur Verfügung. Wegen der mit Abstand zum Steg vorgesehenen Ausströmöffnungen wird jedoch der Weg der Gase in den über dem Steg befindlichen Gassackbereich behindert. Die Gase breiten sich zuerst unterhalb des Gassackpackages aus.Es tritt der Effekt ein, daß zu Beginn der Gassackentfaltung die beidseitig vom Steg angeordneten Gassackbereiche mit einem Mal aus dem Modulgehäuse gedrückt werden, was zu erhöhten Insassenbelastungen führen kann.

In der gattungsbildenden EP 1 188 624 A1 wird ein Airbagmodul beschrieben, bei dem sich ein Gasgenerator in einem Diffusor befindet, der in einem Modulgehäuse angeordnet ist. Der Diffusor weist eine Öffnung auf, durch die hindurch das Gas in einen Airbag strömt. An dem Diffusor ist ein Steg angeordnet, der sich in den Gassack hinein erstreckt und von der Gasaustrittsöffnung beabstandet ist. Der Steg dient als Teilungswand, um den Stauraum für den zugeordneten Gassack in zwei Bereiche zu unterteilen.

Der Erfindung liegt die Aufgabe zugrunde, ein Airbagmodul zu schaffen, das dem Gassack einen ausreichenden Stauraum bereitstellt und eine variabel beeinflußbare, belastungsreduzierende Entfaltung des Gassackes gestattet.

Erfindungsgemäß wird das mit den Merkmalen des Anspruchs 1 erreicht.

Erfindungsgemäß weist bei einem Airbagmodul, insbesondere Beifahrerairbagmodul mit einem Gasgenerator, der in einem Modulgehäuse angeordnet ist, das Modulgehäuse an mindestens einer Seite im Bereich eines zu enfaltenden Gassacks eine durchgehende Gasaustrittsöffnung auf und im Bereich der Gasaustrittsöfffnung ist mindestens ein sich in den Gassack hinein erstreckender Steg angeordnet. Zur Beeinflussung der Entfaltung des Gassacks ist der Steg unmittelbar am Rand der Gasaustrittsöffnung oder über der Gasaustrittsöffnung angeordnet. Dabei kann er entsprechend der geforderten Entfaltungscharakteristik des Gassacks in unterschiedliche Richtungen über der Gasaustrittsöffnung verlaufen und an beliebiger Stelle über der Gasaustrittsöffnung angeordnet sein. Der gefaltete Gassack erstreckt sich hauptsächlich seitlich des Steges.

Diese Anordnung weist den Vorteil auf, daß durch die Anordnung des Steges im Bereich der Gasaustrittsöffnung die Gase direkt entlang des Steges in den darüber befindlichen Gassackbereich geleitet werden. Ein Herausdrücken des gesamten Gassackpaketes wird vermieden und der Gassack entfaltet sich ausgehend von diesem Bereich radial nach außen. Wegen der einzigen Öffnung im Modulgehäuse wird der Fertigungsaufwand verringert. Durch unterschiedliche Anordnung des Steges im Bereich der Gasaustrittsöffnung kann die Gassackentfaltung vielfältig beeinflußt werden. Durch die Kombination der erfindungsgemäßen Merkmale wird also sowohl der Fertigungsaufwand als auch die Einflußmöglichkeit auf die Gassackentfaltung verbessert. Durch den Steg wird der Stauraum für den Gassack nur unwesentlich eingeschränkt.

Vorzugsweise ist der mindestens eine sich in den Gassack hinein erstreckender Steg unmittelbar über der Gasaustrittsöffnung angeordnet.

Der Steg weist vorzugsweise eine geringere Länge auf als der Raum im Modulgehäuseteil für die Lagerung des gefalteten Gassacks und der Steg erstreckt sich bis annähernd zur Oberkante des Modulgehäuses.

In einer bevorzugten Ausführungsform ist das Modulgehäuse zweiteilig ausgeführt, wobei an einem ersten Teil, auch als Unterteil bezeichnet, in dem der Gasgenerator angeordnet ist, die Gasaustrittsöffnung und der Steg vorgesehen sind, wobei in einem zweiten Teil, auch als Oberteil bezeichnet, der gefaltete Gassack angeordnet ist und wobei beide Teile über Flansche verbunden sind, zwischen denen der Einblasmund des Gassacks fixiert ist.

Die Gasaustrittsöffnung verläuft bei Verwendung eines Rohrgasgenerators in dessen Längsachsenrichtung. Der Steg kann bei dieser Ausführung sowohl in Längsachsenrichtung des Rohrgasgenerators oder quer zum Rohrgasgenerator oder schräg bezüglich der Längsachsenrichtung verlaufen. Bereits dadurch kann die Gassackentfaltung in einem weiten Bereich beeinflußt werden. Die Position des Steges wird so gewählt, daß die Packdichte des Gassacks entsprechend der gewünschten Entfaltung eingestellt werden kann.

Zusätzlich kann die Entfaltung durch unterschiedliche Querschnitte des Steges beeinflußt werden. In einer Ausführungsform weist der Steg einen rechteckförmigen Querschnitt auf. In einer weiteren Ausführungsform hat der Steg einen wellenförmigen Querschnitt. Neben einer erhöhten Steifigkeit weist die Wellenform den Vorteil auf, daß die Leitung des Gasstroms in die obere Gewebelage erleichtert wird, da in den Wellentälern ein Abstand zwischen dem gefalteten Gassack und dem Steg vorhanden ist und so ein Gasdurchgang frei bleibt.

Auch durch die Form und den Verlauf des Steges kann die Entfaltung beeinflußt werden. So ist in einer Ausführungsform der Steg bügelförmig ausgebildet, wobei dieser Steg an gegenüberliegenden Seiten der Gasaustrittsöffnung oder an einer Seite der Gasaustrittsöffnung am Modulgehäuse befestigt sein kann.

In einer weiteren Ausführungsform ist der Steg so abgewinkelt, daß er die Gasaustrittsöffnung mindestens teilweise überdeckt. Hierdurch wird der Gasstrom in eine gewünschte Richtung umgelenkt und ein direktes Anstrahlen der oberen Gewebelage des Gassacks wird vermieden oder reduziert.

In einer weiteren Ausführungsform weist der Steg Kanäle für das Leiten des Gasstroms auf. Die Kanäle verlaufen in einer Ausführungsform geradlinig, wobei sie an der Austrittsseite so verlaufen, daß sie auf die über dem Steg liegende Gassacklage gerichtet sind und damit den Gasstrom vorzugsweise in Richtung dieser Gassacklage leiten. In einer weiteren Ausführungsform verlaufen die Kanäle an der Austrittsseite der Gase in anderer Richtung als die Kanäle an der Eintrittsseite, wobei die Austritte der Kanäle vorzugsweise an den Stirnseiten des Steges enden.

Die Erfindung soll in Ausführungsbeispielen anhand von Zeichnungen erläutert werden. Es zeigen:
- Fig. 1A: einen Querschnitt durch ein Beifahrerairbagmodul;
- Fig. 1B: einen Längsschnitt durch das Beifahrerairbagmodul nach Fig. 1A;
- Fig. 2A-2F: Ausführungsformen mit wellenförmigen Stegen;
- Fig. 3: eine Ausführungsform mit geradlinig verlaufenden Kanälen im Steg;
- Fig. 4A, 4B: eine Ausführungsform mit abgewinkelten Kanälen im Steg;
- Fig. 5: eine Ausführungsform mit einem geraden Steg;
- Fig. 6A,6B: Ausführungsformen mit bügelförmigen Stegen;
- Fig. 6C: eine Ausführungsform mit einem abgewinkelten Steg.

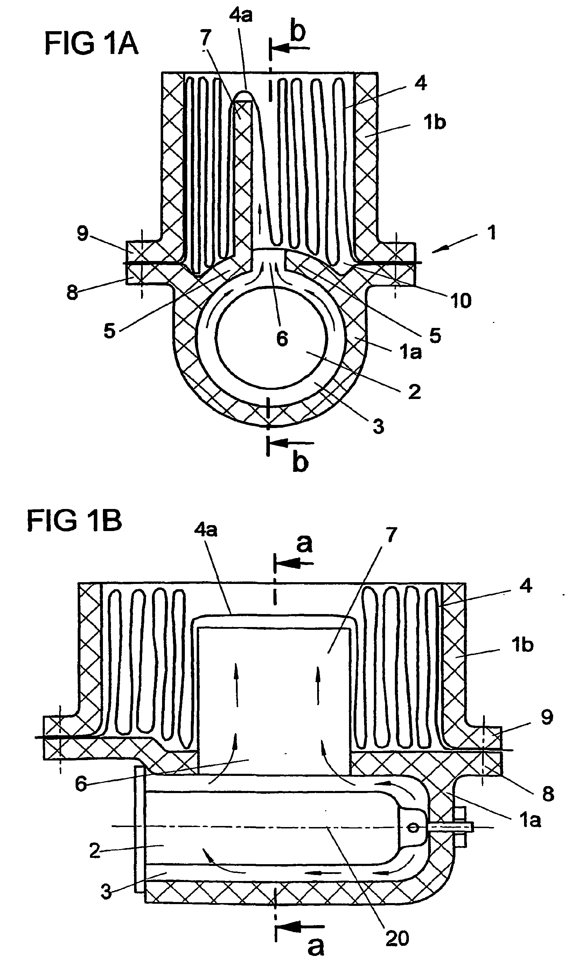

In den Figuren 1A und 1B ist ein zweiteiliges Modulgehäuse 1 dargestellt, das aus einem ersten Teil 1a, das auch als Unterteil bezeichnet werden kann, und einem zweiten Teil 1b, das auch als Oberteil bezeichnet werden kann, besteht. Das Gehäuseunterteil 1a dient der Aufnahme eines Rohrgasgenerators 2 und der Trennung zwischen einem im Gehäuseunterteil gebildeten Druckraum 3 und einem im Gehäuseoberteil 1b angeordneten gefalteten Gassack 4, auch als Gassackpackage bezeichnet. Der trennende Wandungsbereich 5 des Gehäuseunterteils 1a ist mit einer durchgehenden Gasaustrittsöffnung 6 versehen, über die die aus dem Rohrgasgenerator 2 austretenden Gase in den Gassack 4 geleitet werden. Seitlich der Gasaustrittsöffnung ist ein in eine Falte des Gassackpackages hineinragender Steg 7 angeordnet. Dieser verläuft ausgehend von dem trennenden Wandungsbereich 5 annähernd bis zur Oberkante des Gehäuseoberteils 1b und damit bis zur Oberkante des Modulgehäuses 1. Über dem Steg 7 befindet sich nur eine Gassacklage 4a, während der gefaltete Gassack neben dem Steg 7 gelagert ist. Das Gehäuseunterteil 1a weist einen umlaufenden Flansch 8 und das Gehäuseoberteil einen umlaufenden Flansch 9 auf. Die Gehäuseteile 1a und 1b sind mittels dieser Flansche miteinander verbunden. Zwischen diesen Flanschen ist auch der Gassack 4 im Bereich seines Einblasmundes 10 fixiert.

Der Steg 7 trennt das Gassackpackage 4 partiell, da es sich nicht über die gesamte Länge des Gehäuseoberteils 1b erstreckt. Wie aus der Fig. 1A ersichtlich ist, ist in Richtung der Längsachse des Rohrgasgenerators 2 links neben dem Steg 7 ein schmalerer Raum für den gefalteten Gassack vorhanden als auf der rechten Seite, wodurch sich bei zumindest annähernd gleichem Gassackanteil auf beiden Seiten eine unterschiedliche Packungsdichte erzielen läßt und somit die Entfaltung beeinflußt werden kann. So ist aus der Fig. 1A ersichtlich, daß die Packungsdichte auf der linken Seite größer ist als auf der rechten Seite. Da sich auf der rechten Seite des Steges 7 auch die Gasaustrittsöffnung 6 befindet, wird der Gassack auf der rechten Seite des Steges zuerst entfaltet, wobei der Gasstrom durch die Anordnung des Steges 7 gezielt in die obere Gassacklage 4a geleitet wird.

In den folgenden Figuren ist vom Modulgehäuse 1 nur die Gasaustrittsöffnung 6 dargestellt, um deren unterschiedliche Zuordnung zum Steg und die unterschiedlichen Formen des Steges zu erläutern.

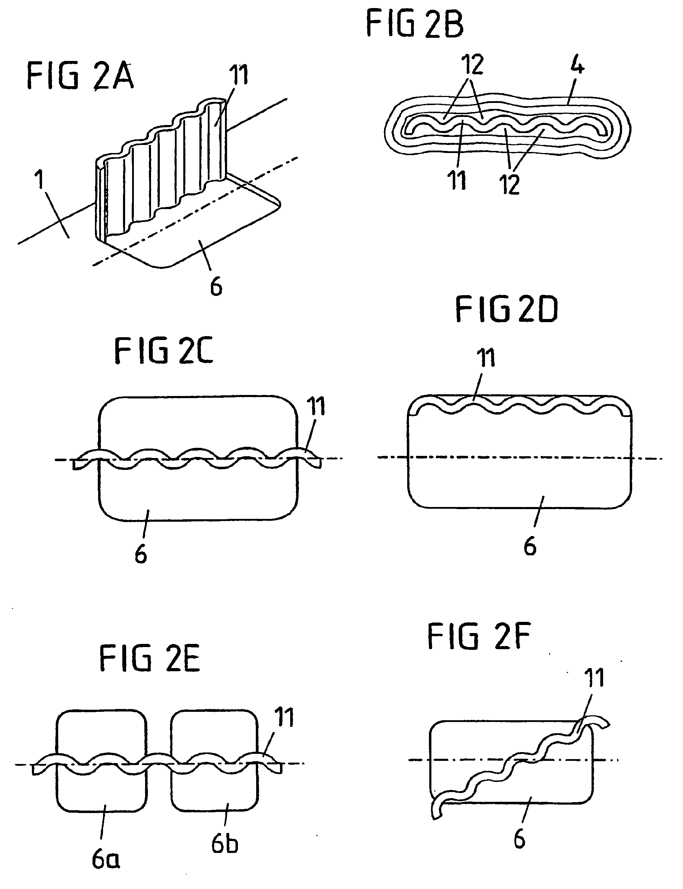

So ist in der Fig. 2A am Rand der Gasaustrittsöffnung 6 ein Steg 11 mit wellenförmigem Querschnitt dargestellt. Neben einer erhöhten Steifigkeit weist die Wellenform den Vorteil auf, daß die Leitung des Gasstroms in die in dieser Figur nicht dargestellte obere Gassacklage erleichtert wird. Wie aus der Draufsicht der Fig. 2B erkennbar ist, ist in den Wellentälern 12 ein Abstand zwischen dem Gassackpackage 4 und dem Steg 11 vorhanden, so daß Gasdurchgänge frei bleiben.

In der Fig 2C ist eine Ausführungsform in der Draufsicht dargestellt, bei der der wellenförmige Steg 11 in der Mitte der Gasaustrittsöffnung 6 angeordnet ist. Mit dieser Ausführungsform kann eine unterschiedliche Packungsdichte beiderseits des Steges erzielt werden, wenn die Gasaustrittsöffnung 6 nicht mittig, wie in der Fig. 1A dargestellt, angeordnet ist.

Die Fig. 2D zeigt eine Draufsicht der Ausführungsform der Fig. 2A.

Die Fig. 2E zeigt eine Variante, bei der zwei Gasaustrittsöffnungen 6a, 6b vorgesehen sind. Über diesen verläuft mittig der wellenförmige Steg 11.

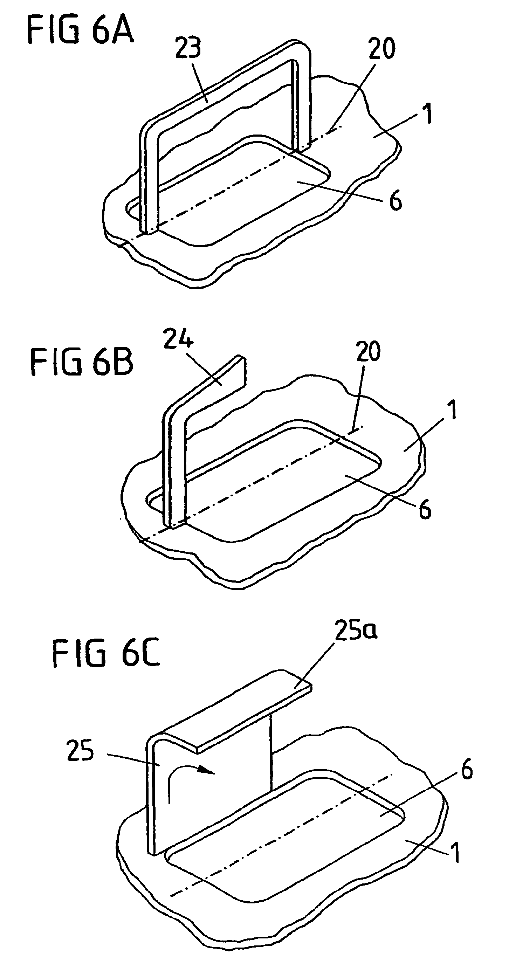

Schließlich ist in der Fig. 6F noch eine Ausführungsform dargestellt, bei der der wellenförmige Steg 11 schräg über der Gasaustrittsöffnung 6 angeordnet ist.

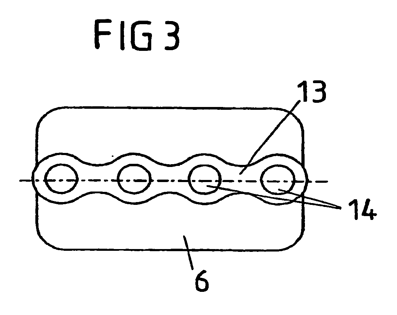

Die Fig. 3 zeigt eine Anordnung in der Draufsicht, bei der ein Steg 13 mit Kanälen 14 vorgesehen ist. Diese verlaufen ausgehend vom Gaseintritt an der Unterseite des Steges bis zum Gasaustritt an der Oberseite des Steges geradlinig in Richtung der oberen Gassacklage, die in dieser Figur nicht dargestellt ist. Der Steg 13 ist mittig über der Gasaustrittsöffnung 6 angeordnet. Die Kanäle ermöglichen eine zusätzliche Beeinflussung der Entfaltung des Gassacks.

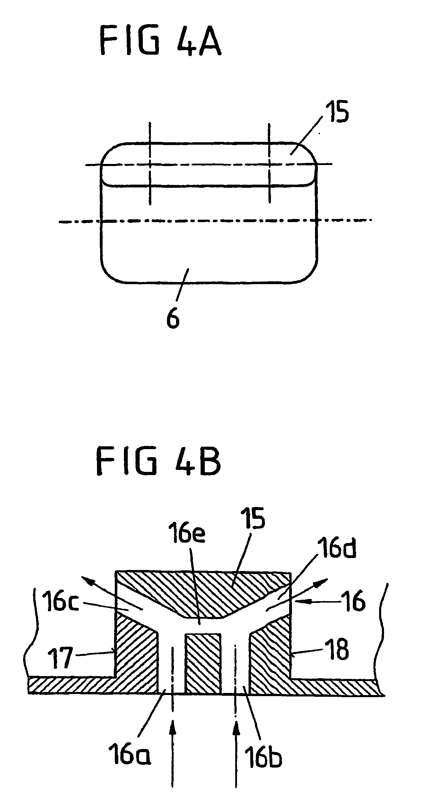

Die Figuren 4a und 4b zeigen einen Steg 15 mit Kanälen 16. Dieser Steg ist seitlich der Gasaustrittsöffnung 6 angeordnet. Bei dieser Ausführungsform verlaufen die Kanäle nicht geradlinig, sondern verzweigen sich im Steg 15. Am Gaseintritt sind parallele Kanäle 16a, b vorhanden, die in der Mitte des Steges 15 in schräg zu den seitlichen Stirnwänden 17, 18 verlaufende Kanäle 16c, d übergehen. Diese Kanäle treten an den genannten Stirnwänden auch aus dem Steg 15 aus. Außerdem wird noch ein Verbindungskanal 16e gebildet.

Auch bei dieser Ausführugnsform werden die aus dem Gasgenerator austretenden Gase zur oberen Gassacklage geleitet. Die schräge Ausrichtung des Gasstroms stellt eine zusätzliche Möglichkeit der Beeinflussung der Gassackentfaltung dar.

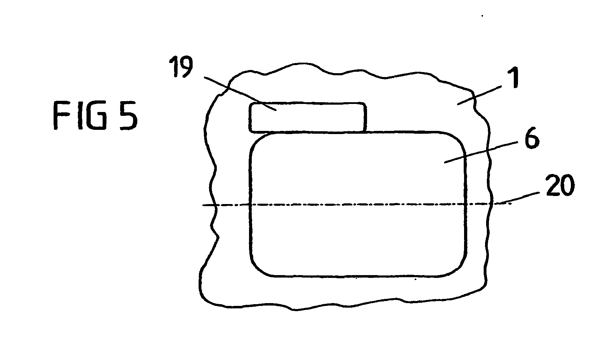

In der Fig. 5 ist ein Steg 19 unmittelbar am Rand der Gasaustrittsöffnung 6 parallel zur Längsachse 20 eines nicht dargestellten Rohrgasgenerators angeordnet. Bei dieser Ausführungsform ist der Steg 19 kürzer als die Gasaustrittsöffnung. Der Steg ist am Modulgehäuse 1 befestigt, das in dieser Figur nur ausschnittsweise dargestellt ist.

Die Figur 5 zeigt nur eine Möglichkeit zur Anordnung des Steges. Durch unterschiedliche Längen und andere Positionierungen des Steges bezüglich der Gasaustrittsöffnung kann die Packdichte und damit die gewünschte Entfaltungscharakteristik eingestellt werden.

In den Figuren 6A-C sind ergänzend zu den Figuren 2 und 3 weitere alternative Stegausführungen dargestellt. Die Fig. 6A zeigt einen bügelförmigen Steg 23, der sich in Richtung der Längsachse 20 des nicht dargestellten Gasgenerators erstreckt. Dieser Steg überspannt die Gasaustrittsöffnung 6 in deren Mitte und ist an deren gegenüberliegenden Rändern am Modulgehäuse 1 befestigt.

Beim Ausführungsbeispiel der Fig. 6B ist ein bügelförmiger Steg 24 vorgesehen, der sich ebenfalls in Richtung der Längsachse 20 des Gasgenerators erstreckt, der aber nur an einer Seite der Gasaustrittsöffnung 6 am Modulgehäuse 1 befestigt ist und sich nur etwa bis zur Mitte der Gasaustrittsöffnung 6 erstreckt.

Bei der Ausführungsform der Fig. 6C ist ein Steg 25 vorgesehen, der im oberen Bereich abgewinkelt ist. Der abgewinkelte Abschnitt 25a überdeckt die Gasaustrittsöffnung 6 in der Fig. 6C teilweise. Dieser Abschnitt kann aber auch so bemessen sein, daß er die Gasaustrittsöffnung vollständig überdeckt. Durch die teilweise oder vollständige Überdekkung wird der Gasstrom in eine gewünschte Richtung umgelenkt und ein direktes Anstrahlen der oberen Gassacklage reduziert oder vermieden.

Die Erfindung ist nicht auf die in den Figuren dargestellten Ausführungsformen beschränkt. So können die Stege andere Formen aufweisen und an anderen Stellen angeordnet sein. Weiterhin können auch mehrere Stege vorgesehen sein.

## Patentansprüche

1. Airbagmodul, insbesondere Beifahrerairbagmodul mit einem Gasgenerator, der in einem Modulgehäuse angeordnet ist, wobei das Modulgehäuse (1) an mindestens einer Seite im Bereich eines zu entfaltenden Gassacks (4) eine durchgehende Gasaustrittsöffnung (6) aufweist,
**dadurch gekennzeichnet,**
**daß** mindestens ein sich in den Gassack (4) hinein erstreckender Steg (7, 11, 13, 15, 19, 21, 22, 23, 24, 25) seitlich der Gasaustrittsöffnung (6), unmittelbar an deren Rand verlaufend oder über der Gasaustrittsöffnung (6) angeordnet ist.

2. Airbagmodul nach Anspruch 1, **dadurch gekennzeichnet, daß** der mindestens eine sich in den Gassack hinein erstreckende Steg (11) unmittelbar über der Gasaustrittsöffnung (6a, 6b) angeordnet ist.

3. Airbagmodul nach Anspruch 1 oder 2, **dadurch gekennzeichnet, daß** der Steg (7, 11, 13, 15, 19, 21, 22, 23, 24, 25) eine geringere Långe aufweist als der Raum im Modulgehäuse (1) für die Lagerung des gefalteten Gassacks (1) und daß sich der Steg bis annähernd zur Oberkante des Modulgehäuses (1) erstreckt.

4. Airbagmodul nach mindestens einem der Ansprüche 1 bis 3, **dadurch gekennzeichnet, daß** sich über dem Steg (7, 11, 13, 15, 19, 21, 22, 23, 24, 25) nur eine Gassacklage (4a) befindet.

5. Airbagmodul nach mindestens einem der vorhergehenden Ansprüche, **dadurch gekennzeichnet, daß** das Modulgehäuse (1) zweiteilig ausgeführt ist, wobei an einem ersten Teil, auch als Unterteil (1a) bezeichnet, in dem der Gasgenerator (2) angeordnet ist, die Gasaustrittsöffnung (6) und der Steg (7) vorgesehen sind, wobei in einem zweiten Teil, auch als Oberteil (1b) bezeichnet, der gefaltete Gassack (4) angeordnet ist und wobei beide Teile über Flansche (8, 9) verbunden sind, zwischen denen der Einblasmund (10) des Gassacks (4) fixiert ist.

6. Airbagmodul nach mindestens einem der vorhergehenden Ansprüche, **dadurch gekennzeichnet, daß** die Gasaustrittsöffnung (6) bei Verwendung eines Rohrgasgenerators (2) in dessen Längsachsenrichtung verläuft.

7. Airbagmodul nach Anspruch 6, **dadurch gekennzeichnet, daß** der Steg (7) in Längsachsenrichtung des Rohrgasgenerators (2) verläuft.

8. Airbagmodul nach Anspruch 6 oder 7, **dadurch gekennzeichnet, daß** der Steg (22) quer zum Rohrgasgenerator (2) verläuft.

9. Airbagmodul nach mindestens einem der Ansprüche 6 bis 8, **dadurch gekennzeichnet, daß** der Steg schräg bezüglich der Längsachsenrichtung (20) des Rohrgasgenerators verläuft.

10. Airbagmodul nach mindestens einem der vorhergehenden Ansprüche, **dadurch gekennzeichnet, daß** der Steg (7) einen rechteckförmigen Querschnitt aufweist.

11. Airbagmodul nach mindestens einem der vorhergehenden Ansprüche, **dadurch gekennzeichnet, daß** der Steg (11) einen wellenförmigen Querschnitt aufweist.

12. Airbagmodul nach mindestens einem der vorhergehenden Ansprüche, **dadurch gekennzeichnet, daß** der Steg (23, 24) bügelförmig ausgebildet ist.

13. Airbagmodul nach Anspruch 12, **dadurch gekennzeichnet, daß** der bügelförmige Steg (23) an gegenüberliegenden Seiten der Gasaustrittsöffnung (6) am Modulgehäuse (1) befestigt ist.

14. Airbagmodul nach Anspruch 12 oder 13, **dadurch gekennzeichnet, daß** der bügelfömige Steg (24) an einer Seite der Gasaustrittsöffnung (6) am Modulgehäuse (1) befestigt ist.

15. Airbagmodul nach mindestens einem der vorhergehenden Ansprüche, **dadurch gekennzeichnet, daß** der Steg (25) so abgewinkelt ist, daß er die Gasaustrittsöffnung (6) mindestens teilweise überdeckt.

16. Airbagmodul nach mindestens einem der vorhergehenden Ansprüche, **dadurch gekennzeichnet, daß** der Steg (13, 15) Kanäle (14, 16) für das Leiten des Gasstroms aufweist.

17. Airbagmodul nach Anspruch 16, **dadurch gekennzeichnet, daß** die Kanäle (14) geradlinig verlaufen.

18. Airbagmodul nach Anspruch 16 oder 17, **dadurch gekennzeichnet, daß** die Kanäle (14) an der Austrittsseite so verlaufen, daß sie auf die über dem Steg (13) liegende Gassacklage gerichtet sind.

19. Airbagmodul nach mindestens einem der Ansprüche 16 bis 18, **dadurch gekennzeichnet, daß** die Kanäle (16c, 16d) an der Austrittsseite der Gase in anderer Richtung verlaufen als die Kanäle (16a, 16b) an der Eintrittsseite der Gase.

20. Airbagmodul nach mindestens einem der Ansprüche 16 bis 19, **dadurch gekennzeichnet, daß** die Austritte der Kanäle (16c, 16d) an den Stirnseiten des Steges (15) enden.

## Claims

1. Airbag module, especially a passenger airbag module, having a gas generator which is arranged in a module housing, the module housing (1) having a continuous gas outlet opening (6) on at least one side in the region of an airbag (4) to be deployed,
**characterized**
**in that** at least one web (7, 11, 13, 15, 19, 21, 22, 23, 24, 25) extending into the airbag (4) is arranged to the side of the gas outlet opening (6), running directly on the edge thereof or above the gas outlet opening (6).

2. Airbag module according to Claim 1, **characterized in that** the at least one web (11) extending into the airbag is arranged directly above the gas outlet opening (6a, 6b).

3. Airbag module according to Claim 1 or 2, **characterized in that** the web (7, 11, 13, 15, 19, 21, 22, 23, 24, 25) has a smaller length than the space in the module housing (1) for the mounting of the folded airbag (1), and **in that** the web extends almost as far as the upper edge of the module housing (1).

4. Airbag module according to at least one of Claims 1 to 3, **characterized in that** there is only one airbag layer (4a) above the web (7, 11, 13, 15, 19, 21, 22, 23, 24, 25).

5. Airbag module according to at least one of the preceding claims, **characterized in that** the module housing (1) is of two-part design, the gas outlet opening (6) and the web (7) being provided on a first part, also referred to as lower part (1a), in which the gas generator (2) is arranged, the folded airbag (4) being arranged in a second part, also referred to as upper part (1b), and both parts being connected via flanges (8, 9) between which the blow-in mouth (10) of the airbag (4) is fixed.

6. Airbag module according to at least one of the preceding claims, **characterized in that**, when a tubular gas generator (2) is used, the gas outlet opening (6) runs in the direction of its longitudinal axis.

7. Airbag module according to Claim 6, **characterized in that** the web (7) runs in the direction of the longitudinal axis of the tubular gas generator (2).

8. Airbag module according to Claim 6 or 7, **characterized in that** the web (22) runs transversely to the tubular gas generator (2).

9. Airbag module according to at least one of Claims 6 to 8, **characterized in that** the web runs obliquely with respect to the direction of the longitudinal axis (20) of the tubular gas generator.

10. Airbag module according to at least one of the preceding claims, **characterized in that** the web (7) has a rectangular cross section.

11. Airbag module according to at least one of the preceding claims, **characterized in that** the web (11) has a wave-shaped cross section.

12. Airbag module according to at least one of the preceding claims, **characterized in that** the web (23, 24) is of bow-shaped design.

13. Airbag module according to Claim 12, **characterized in that** the bow-shaped web (23) is fastened to the module housing (1) on opposite sides of the gas outlet opening (6).

14. Airbag module according to Claim 12 or 13, **characterized in that** the bow-shaped web (24) is fastened to the module housing (1) on one side of the gas outlet opening (6).

15. Airbag module according to at least one of the preceding claims, **characterized in that** the web (25) is angled in such a manner that it at least partially covers the gas outlet opening (6).

16. Airbag module according to at least one of the preceding claims, **characterized in that** the web (13, 15) has channels (14, 16) for conducting the gas flow.

17. Airbag module according to Claim 16, **characterized in that** the channels (14) run rectilinearly.

18. Airbag module according to Claim 16 or 17, **characterized in that** the channels (14) on the outlet side run in such a manner that they are directed onto the airbag layer situated above the web (13).

19. Airbag module according to at least one of Claims 16 to 18, **characterized in that** the channels (16c, 16d) on the outlet side of the gases run in a different direction from the channels (16a, 16b) on the inlet side of the gases.

20. Airbag module according to at least one of Claims 16 to 19, **characterized in that** the outlets of the channels (16c, 16d) end on the end sides of the web (15).

## Revendications

1. Module de sac gonflable, en particulier module de sac gonflable de passager pourvu d'un générateur de gaz, lequel est agencé dans un boîtier de module, le boîtier de module (1) étant pourvu, sur au moins un côté d'un sac devant être déplié (4), d'une ouverture de sortie de gaz (6) traversante, **caractérisé en ce qu'**au moins une rainure (7, 11, 13, 15, 19, 21, 22, 23, 24, 25) s'étendant latéralement par rapport à l'ouverture de sortie de gaz (6) à l'intérieur du sac de gaz (4), est orientée directement sur son bord ou est agencée au-dessus de l'ouverture de sortie de gaz (6).

2. Module de sac gonflable selon la revendication 1, **caractérisé en ce qu'**au moins une rainure (11) s'étendant à l'intérieur du sac de gaz est agencée directement au-dessus de l'ouverture de sortie de gaz (6a, 6b).

3. Module de sac gonflable selon la revendication 1 ou 2, **caractérisé en ce que** la rainure (7, 11, 13, 15, 19, 21, 22, 23, 24, 25) est pourvue d'une longueur inférieure à l'espace dans le boîtier de module (1) destiné au logement du sac de gaz plié (1), et **en ce que** la rainure s'étend jusqu'à proximité du bord supérieur du boîtier de module (1).

4. Module de sac gonflable selon l'une quelconque des revendications 1 à 3, **caractérisé en ce qu'**un seul logement de sac de gaz (4a) se situe au-dessus de la rainure (7, 11, 13, 15, 19, 21, 22, 23, 24, 25).

5. Module de sac gonflable selon l'une quelconque des revendications précédentes, **caractérisé en ce que** le boîtier (1) est formé en deux parties, l'ouverture de sortie de gaz (6) et la rainure (7) étant prévues au niveau d'une première partie, désignée également en tant que partie inférieure (1a), dans laquelle le générateur de gaz (2) est agencé, le sac de gaz plié (4) étant agencé dans la seconde partie, également désignée comme partie supérieure (1b), les deux parties étant reliées à l'aide de collets (8, 9), entre lesquels une bouche d'injection (10) du sac de gaz (4) est fixée.

6. Module de sac gonflable selon l'une quelconque des revendications précédentes, **caractérisé en ce que** l'ouverture de sortie de gaz (6) s'étend, lors de l'utilisation d'un générateur de gaz (2), dans sa direction longitudinale.

7. Module de sac gonflable selon la revendication 6, **caractérisé en ce que** la rainure (7) s'étend dans la direction longitudinale du générateur de gaz (2).

8. Module de sac gonflable selon la revendication 6 ou 7, **caractérisé en ce que** la rainure (22) s'étend de manière transversale vers le générateur de gaz (2).

9. Module de sac gonflable selon l'une quelconque des revendications 6 à 8, **caractérisé en ce que** la rainure s'étend en diagonale par rapport à la direction longitudinale (20) du générateur de gaz.

10. Module de sac gonflable selon l'une quelconque des revendications précédentes, **caractérisé en ce que** la rainure (7) est pourvue d'une coupe transversale ayant une forme carrée.

11. Module de sac gonflable selon l'une quelconque des revendications précédentes, **caractérisé en ce que** la rainure (11) est pourvue d'une coupe transversale ayant la forme d'une onde.

12. Module de sac gonflable selon l'une quelconque des revendications précédentes, **caractérisé en ce que** la rainure (23, 24) est pourvue d'une coupe transversale ayant la forme d'une boucle.

13. Module de sac gonflable selon la revendication 12, **caractérisé en ce que** la rainure en forme de boucle (23) est fixée sur les côtés opposés de l'ouverture de sortie de gaz (6) au niveau du boîtier de module (1).

14. Module de sac gonflable la revendication 12 ou 13, **caractérisé en ce que** la rainure en forme de boucle (24) est fixée sur un côté de l'ouverture de sortie de gaz (6) au niveau du boîtier de module (1).

15. Module de sac gonflable selon l'une quelconque des revendications précédentes, **caractérisé en ce que** la rainure (25) comporte un angle lui permettant de recouvrir partiellement l'ouverture de sortie de gaz (6).

16. Module de sac gonflable selon l'une quelconque des revendications précédentes, **caractérisé en ce que** la rainure (13, 15) est pourvue de canaux (14, 16) pour l'acheminement du flux de gaz.

17. Module de sac gonflable selon la revendication 16, **caractérisé en ce que** les canaux (14) s'étendent en ligne droite.

18. Module de sac gonflable selon la revendication 16 ou 17, **caractérisé en ce que** les canaux (14) s'étendent sur le côté de la sortie, de telle sorte qu'ils soient orientés vers le logement de sac de gaz se trouvant au-dessus de la rainure (13).

19. Module de sac gonflable selon l'une quelconque des revendications 16 à 18, **caractérisé en ce que** les canaux (16c, 16d) s'étendent sur le côté de sortie de gaz dans une direction différente de celle des canaux (16a, 16b) sur le côté d'entrée.

20. Module de sac gonflable selon l'une quelconque des revendications 16 à 19, **caractérisé en ce que** les sorties des canaux (16c, 16d) finissent sur les côtés avant de la rainure (15).
